(19) Europäisches Patentamt / European Patent Office / Office européen des brevets

(11) **EP 4 431 936 B1**

(12) **EUROPEAN PATENT SPECIFICATION**

(45) Date of publication and mention
of the grant of the patent:
**05.08.2026 Bulletin 2026/32**

(21) Application number: **22892652.3**

(22) Date of filing: **31.10.2022**

(51) International Patent Classification (IPC):
**G01N 29/024** *(2006.01)* **G01N 29/036** *(2006.01)*
**G01N 29/44** *(2006.01)*

(52) Cooperative Patent Classification (CPC):
**G01N 29/024; G01N 29/036; G01N 29/44**

(86) International application number:
**PCT/JP2022/040656**

(87) International publication number:
**WO 2023/085153 (19.05.2023 Gazette 2023/20)**

(54) **WAVEFORM SHAPING DEVICE AND GAS CONCENTRATION MEASURING DEVICE**

WELLENFORMUNGSVORRICHTUNG UND GASKONZENTRATIONSMESSVORRICHTUNG

DISPOSITIF DE MISE EN FORME DE FORME D'ONDE ET DISPOSITIF DE MESURE DE CONCENTRATION DE GAZ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.11.2021 JP 2021184739**

(43) Date of publication of application:
**18.09.2024 Bulletin 2024/38**

(73) Proprietors:
• **Nisshinbo Holdings Inc.**
**Tokyo 103-8650 (JP)**
• **Japan Radio Co., Ltd.**
**Mitaka-shi, Tokyo 181-0002 (JP)**
• **Ueda Japan Radio Co., Ltd.**
**Ueda-shi, Nagano 386-8608 (JP)**

(72) Inventors:
• **SHINFUKU, Yoshifumi**
**Mitaka-shi, Tokyo 181-0002 (JP)**
• **ITO, Isao**
**Ueda-shi, Nagano 386-8608 (JP)**

(74) Representative: **Wunderlich & Heim**
**Patentanwälte**
**PartG mbB**
**Irmgardstraße 3**
**81479 München (DE)**

(56) References cited:
JP-A- 2000 304 732    JP-A- 2000 304 732
JP-A- 2010 071 971    JP-A- 2010 071 971
JP-A- 2014 178 231    JP-A- 2017 075 849
JP-A- 2019 066 421    JP-B2- S5 927 568
US-A1- 2012 055 253

**Description**

TECHNICAL FIELD

The present disclosure relates to a waveform shaping apparatus and a gas concentration measurement apparatus, and in particular to waveform shaping of a signal.

BACKGROUND

Research and development is widely carried out for fuel cell vehicles which travel with electric power supplied from a fuel cell. A fuel cell generates electric power as a result of a chemical reaction between hydrogen and oxygen. In general, hydrogen is supplied to the fuel cell as a fuel, and oxygen is taken into the fuel cell from surrounding air. The fuel cell vehicle is equipped with a hydrogen tank, and hydrogen is supplied from the hydrogen tank to the fuel cell. When an amount of hydrogen in the hydrogen tank becomes low, hydrogen is supplied from a hydrogen supply apparatus provided in a service station to the hydrogen tank of the fuel cell vehicle.

Because hydrogen is a combustible gas, it is necessary to monitor for leakage of hydrogen from the fuel cell vehicle and the hydrogen supply apparatus. For this purpose, a hydrogen concentration measurement apparatus is widely in use in a fuel cell vehicle and a hydrogen supply apparatus. The hydrogen concentration measurement apparatus has functions such as measuring concentration of hydrogen contained in air, and sending an alert when the hydrogen concentration becomes greater than a predetermined value.

JP 2018-100916 A discloses an apparatus which measures concentration of a particular gas. This apparatus measures the concentration of the particular gas based on a propagation velocity of ultrasound in air which is the measurement target. A propagation time from transmission of ultrasound from a transmitter to reception, by a receiver, of the ultrasound that has propagated through a measurement section within the concentration measurement space, is measured, a propagation velocity is measured based on the propagation time, and the concentration of the gas is then measured.

JP 2000-249691 A discloses a gas concentration sensor which transmits ultrasound to a measurement chamber, receives reflected waves reflected by a wall surface of the measurement chamber, determines a propagation time which is a time of propagation of the ultrasound through the measurement chamber, and determines a propagation velocity, to thereby detect a concentration of gas to be measured. JP 2000-249691 A discloses that the propagation time is determined based on a difference between a time of reception of a first reflected wave which is received by an ultrasound element at an earlier time and a time of reception of a second reflected wave which is received by the ultrasound element at a later time.

JP 59-27568 B2 discloses a respiratory gas measuring device capable of effectively measuring the flow rate of respiratory gas and the concentration of carbon dioxide using ultrasonic waves. By measuring the propagation characteristics (propagation time and attenuation) of an ultrasonic wave propagating between opposed ultrasonic transducers, the respiratory gas flowing through the ultrasonic transmission / reception path is measured.

SUMMARY

TECHNICAL PROBLEM

When a time of propagation of the ultrasound through the measurement chamber is to be determined based on a difference between a time at which the first ultrasound, which is received by the ultrasound element earlier, is received, and a time at which the second ultrasound, which is received by the ultrasound element later, is received as described in JP 2000-249691 A, the following problem may arise. Specifically, when the propagation distance in the measurement chamber is short or when a propagation velocity is large, the first ultrasound and the second ultrasound may overlap on the time axis, resulting in an error in the measurement of the propagation time.

An advantage of the present disclosure lies in accurate measurement of a concentration of a gas.

SOLUTION TO PROBLEM

According to one aspect of the present invention, there is provided a waveform shaping apparatus with the features of claim 1 comprising: a receiver that receives ultrasound of a frequency which follows a frequency control value, and that outputs a reception signal; and an analyzer that generates a shaped reception signal obtained by combining an adjusted signal, obtained by delaying the reception signal and adjusting a level thereof, with the reception signal, wherein the analyzer determines an evaluation value obtained by combining and integrating a delay signal, obtained by delaying the reception signal by a delay time corresponding to the frequency control value, and the reception signal, and searches for the frequency control value which results in a local minimum of the evaluation value, and the analyzer generates the adjusted signal based on the delay signal corresponding to the frequency control value resulting in the local minimum of the evaluation value.

Desirably, the analyzer determines a level evaluation value obtained by combining and integrating a level adjusted delay signal, obtained by multiplying the delay signal, corresponding to the frequency control value resulting in the local minimum of the evaluation value, by a level adjustment coefficient, and the reception signal, and searches for the level adjustment coefficient which results in a local minimum of the level evaluation value, and the analyzer generates the adjusted signal based on the level adjusted delay signal corresponding to the level adjustment coefficient resulting in the local minimum of the level evaluation value.

According to another aspect of the present invention, there is provided a gas concentration measurement apparatus with the features of claim 3 comprising: a concentration measurement space in which a concentration of a gas is measured; a transmitter that transmits ultrasound to the concentration measurement space in response to a transmission pulse signal; a receiver that receives ultrasound that has propagated through the concentration measurement space, and that outputs a reception signal; and an analyzer that determines a space propagation time, which is a time of propagation of the ultrasound through the concentration measurement space, based on points of time at which a plurality of pulses of the reception signal are output from the receiver, and that determines a concentration of a gas which is a measurement target based on the space propagation time, wherein the analyzer generates a shaped reception signal by combining an adjusted signal, obtained by delaying the reception signal and adjusting a level thereof, with the reception signal, and the analyzer determines the space propagation time based on the shaped reception signal.

Desirably, the analyzer determines the space propagation time based on a difference between a first reception time at which a pulse of the reception signal is output from the receiver a first time after the transmission pulse signal is input to the transmitter, and a second reception time at which a pulse of the reception signal is output from the receiver a second time after the transmission pulse signal is input to the transmitter.

Desirably, the transmitter transmits an ultrasound of a frequency which follows a frequency control value, the analyzer determines, separately from a process for determining the concentration of the gas, an evaluation value obtained by combining and integrating a delay signal, obtained by delaying the reception signal by a delay time according to the frequency control value, and the reception signal, and searches for the frequency control value which results in a local minimum of the evaluation value, and, in the process for determining the concentration of the gas, the analyzer generates the delay signal corresponding to the frequency control value resulting in the local minimum of the evaluation value, and generates the adjusted signal based on the delay signal.

Desirably, the analyzer determines, separately from the process for determining the concentration of the gas which is the measurement target, a level evaluation value obtained by combining and integrating a level adjusted delay signal, obtained by multiplying the delay signal corresponding to the frequency control value resulting in the local minimum of the evaluation value, by a level adjustment coefficient, and the reception signal, and searches for the level adjustment coefficient which results in a local minimum of the level evaluation value, and, in the process for determining the concentration of the gas, the analyzer generates the level adjusted delay signal corresponding to the level adjustment coefficient resulting in the local minimum of the level evaluation value, and generates the adjusted signal based on the level adjusted delay signal.

ADVANTAGEOUS EFFECTS

According to the present invention, the concentration of the gas can be accurately measured.

BRIEF DESCRIPTION OF DRAWINGS

FIG. 1 is a diagram showing a structure of a gas concentration measurement apparatus according to an embodiment of the present disclosure.
FIG. 2 is a diagram schematically showing a time waveform of a reception pulse.
FIG. 3 is a diagram showing a time waveform determined through a simulation for a reception signal.
FIG. 4 is a diagram showing a specific structure of a gas concentration measurement apparatus.
FIG. 5 is a diagram showing a specific structure of a waveform shaper.
FIG. 6 is a diagram showing a time waveform determined through a simulation for a shaped reception signal.
FIG. 7 is a diagram showing a relationship between a frequency candidate value and an evaluation value.
FIG. 8 is a diagram showing an example of a procedure of gas concentration measurement.

DESCRIPTION OF EMBODIMENTS

An embodiment of the present disclosure will now be described with reference to the drawings. The same constituent elements shown in a plurality of drawings are assigned the same reference numerals, and will only be briefly described.

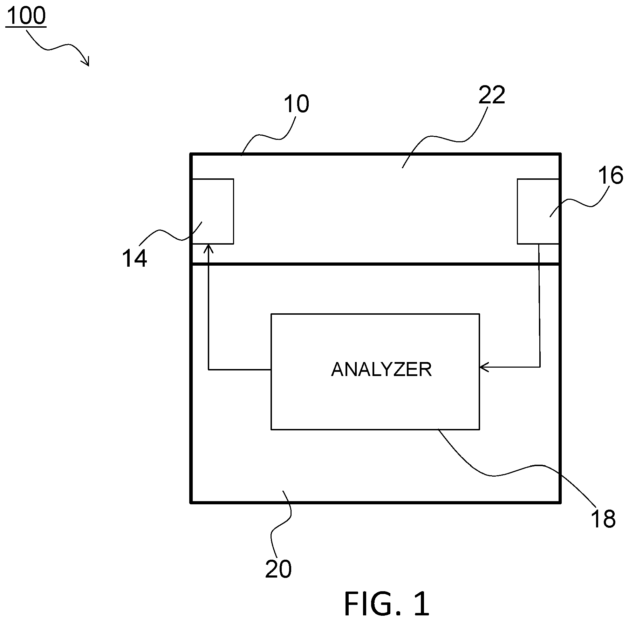

FIG. 1 shows a structure of a gas concentration measurement apparatus 100 according to an embodiment of the present disclosure. The gas concentration measurement apparatus 100 includes a housing 10, a transmitter 14, a receiver 16, and an analyzer 18. The housing 10 forms an analyzer housing space 20 and a concentration measurement space 22. The concentration measurement space 22 is a space having a tubular shape with respective ends blocked. The transmitter 14 is placed at one end of the concentration measurement space 22, and the receiver 16 is placed at the other end.

The analyzer 18 is housed in the analyzer housing space 20. The analyzer 18 may be formed from an electronic circuit, which may be fixed in the analyzer housing space 20, in a state of being fixed on a substrate.

Each of the transmitter 14 and the receiver 16 has an ultrasound transducer. The transmitter 14 and the receiver 16 are connected to the analyzer 18. The transmitter 14 transmits ultrasound to the concentration measurement space 22 according to control by the analyzer 18. That is, the analyzer 18 outputs a transmission pulse signal which is an electric signal to the transmitter 14. The transmitter 14 converts the transmission pulse signal to ultrasound, and transmits the ultrasound. The receiver 16 receives ultrasound that has propagated through the concentration measurement space 22. The receiver 16 converts the received ultrasound to a reception signal which is an electric signal, and outputs the reception signal to the analyzer 18.

The analyzer 18 determines a space propagation time, which is a time of propagation of the ultrasound through the concentration measurement space 22, based on a point in time of output of a plurality of pulses of the reception signal from the receiver 16, and determines a concentration of a gas which is a measurement target, based on the space propagation time.

The analyzer 18 measures a space propagation time required for ultrasound to propagate from one end to the other end of the concentration measurement space 22 through a process described below. The analyzer 18 determines the space propagation time based on a difference (time difference) between a first reception time at which a pulse of the reception signal (reception pulse) is output from the receiver 16 for a first time after the transmission pulse signal is output to the transmitter 14, and a second reception time at which the reception pulse is output from the receiver 16 for a second time.

The reception pulse which is output from the receiver 16 for the first time corresponds to a direct ultrasound which is received by the receiver 16 for a first time. The direct ultrasound is ultrasound which is transmitted from the transmitter 14, propagates from the one end to the other end through the concentration measurement space 22, and is received by the receiver 16. The reception pulse which is output from the receiver 16 for the second time corresponds to reflected ultrasound which propagates through the concentration measurement space 22 for one and a half round trips after being transmitted from the transmitter 14, and is received by the receiver 16. The reflected ultrasound is ultrasound which is transmitted from the transmitter 14, propagates from the one end to the other end through the concentration measurement space 22, is reflected at the other end, propagates from the other end to the one end through the concentration measurement space 22, is reflected at the one end, propagates through the concentration measurement space 22, and is received by the receiver 16.

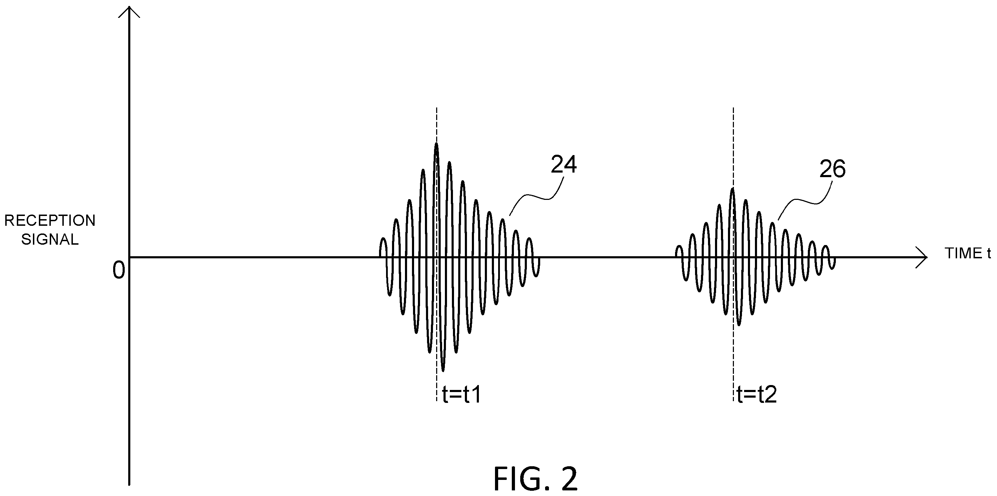

FIG. 2 schematically shows a time waveform of the reception pulse which is output from the receiver 16. At time t=0, the transmission pulse signal is output from the analyzer 18 to the transmitter 14. The reception signal which is output from the receiver 16 to the analyzer 18 includes a reception pulse having a time waveform of a sine wave shape to which amplitude modulation is applied in a pulse form. The reception pulse which is output from the receiver 16 for the first time (a direct wave reception pulse 24) has a maximum absolute value of wave height at time t=t1. The reception pulse which is output from the receiver 16 for the second time (a reflected wave reception pulse 26) has a maximum absolute value of wave height at time t=t2, which is later than the time t=t1.

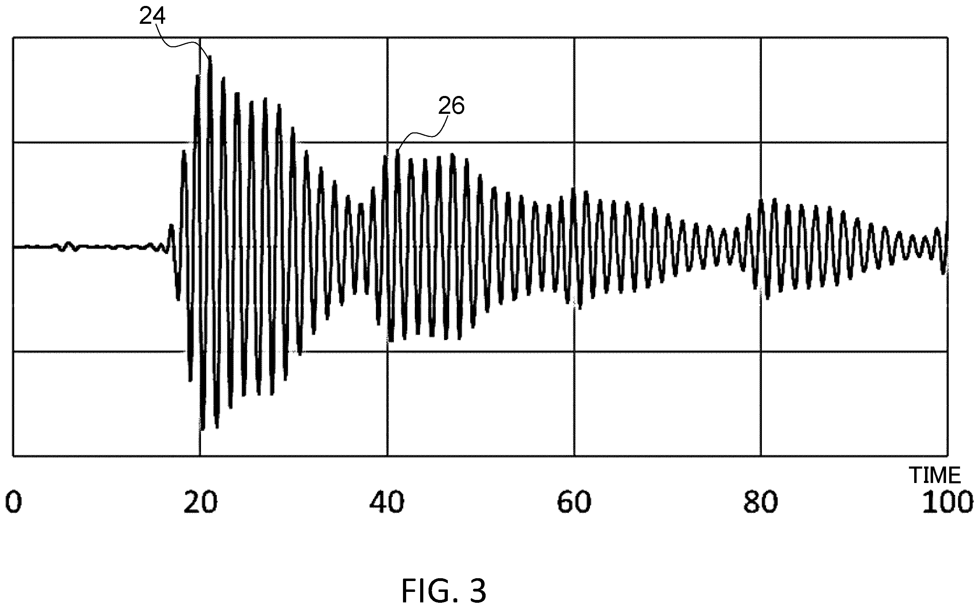

FIG. 2 is a diagram schematically showing an ideal time waveform of a reception pulse which is output from the receiver 16. The actual reception pulse has a time waveform (oscillating waveform) by free oscillation, with a tail behind the reception pulse. FIG. 3 shows a time waveform determined through a simulation for the reception signal. In this time waveform, the oscillating waveform of the direct wave reception pulse 24, and a waveform of the reflected wave reception pulse 26 overlap each other. Thus, the apparatus cannot recognize the waveform of the reflected wave reception pulse 26.

In consideration of this, in the gas concentration measurement apparatus 100 of the embodiment of the present disclosure, the analyzer 18 applies a waveform shaping process on the reception signal, to generate a shaped reception signal in which the oscillating waveform is suppressed, and determines the space propagation time which is a time of propagation of the ultrasound through the concentration measurement space 22, based on the direct wave reception pulse and the reflected wave reception pulse included in the shaped reception signal. Here, the waveform shaping process is a process to generate an adjusted signal obtained by delaying the reception signal and adjusting a level thereof, and to generate a shaped reception signal by combining the adjusted signal and the reception signal.

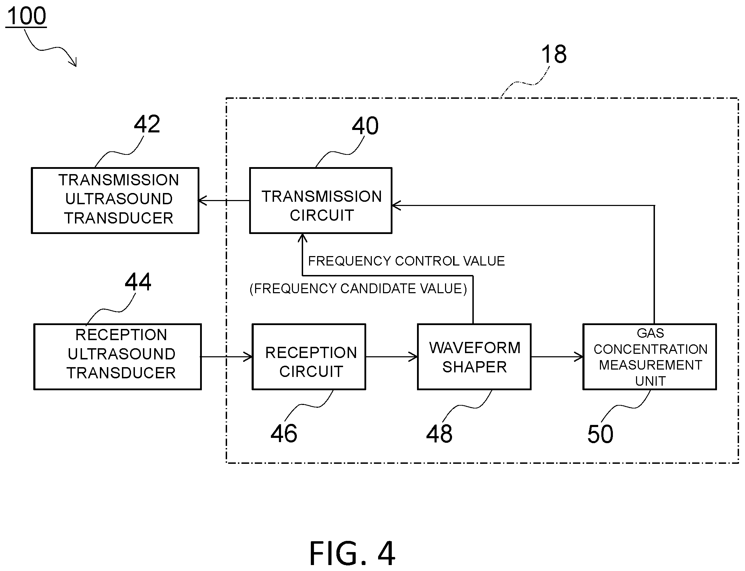

FIG. 4 shows a specific structure of the gas concentration measurement apparatus 100. The gas concentration measurement apparatus 100 comprises a transmission ultrasound transducer 42 included in the transmitter 14, a reception ultrasound transducer 44 included in the receiver 16, and the analyzer 18. The analyzer 18 comprises a transmission circuit 40, a reception circuit 46, a waveform shaper 48, and a gas concentration measurement unit 50. The waveform shaper 48 and the gas concentration measurement unit 50 may be formed from a processor which executes a program which is stored in advance.

The gas concentration measurement unit 50 controls the transmission circuit 40 to cause the transmission circuit 40 to output a transmission pulse signal. In response to the control of the gas concentration measurement unit 50, the transmission circuit 40 outputs the transmission pulse signal to the transmission ultrasound transducer 42. In this process, the transmission circuit 40 sets a frequency of the transmission pulse signal following a frequency control value determined by the waveform shaper 48. The transmission ultrasound transducer 42 transmits ultrasound of a frequency which follows the frequency control value, in response to the transmission pulse signal.

The reception ultrasound transducer 44 converts the ultrasound that has propagated through the concentration measurement space 22 into a reception signal which is an electric signal, and outputs the reception signal to the reception circuit 46. The reception circuit 46 converts the reception signal into a digital signal, and outputs the digital signal to the waveform shaper 48. The waveform shaper 48 applies the waveform shaping process to the reception signal to generate a shaped reception signal, and outputs the shaped reception signal to the gas concentration measurement unit 50.

The gas concentration measurement unit 50 may detect a first reception time and a second reception time based on the direct wave reception pulse and the reflected wave reception pulse included in the shaped reception signal, and may determine the space propagation time by subtracting a time indicating the first reception time from a time indicating the second reception time.

The gas concentration measurement unit 50 may store the direct wave reception pulse and the reflected wave reception pulse included in the shaped reception signal, and may execute the following process to determine the space propagation time. That is, the gas concentration measurement unit 50 determines a correlation value between a shifted pulse obtained by provisionally advancing the reflected wave reception pulse by a shift time $\tau$, and the direct wave reception pulse. The gas concentration measurement unit 50 then determines the shift time $\tau$ which results in the highest correlation value as the space propagation time.

Alternatively, when the space propagation time is determined, Euclid distance may be employed in place of the correlation value. The Euclid distance is defined as a square root of a value obtained by integrating a square of a difference of two signals. When the Euclid distance is determined, for example, the magnitude(s) of one or both signals may be adjusted so that the maximum values of the two signals become equal to each other. A smaller Euclid distance means a higher degree of similarity between the two signals.

A concentration calculation formula (Formula (1)) is widely known, which represents a relationship between a propagation velocity of the ultrasound and the concentration of a particular gas contained in the gas through which the ultrasound propagates. The analyzer 18 uses the concentration calculation formula (Formula (1)) or a formula having the same meaning, to determine the concentration of the gas from the space propagation time T and a length L of the concentration measurement space 22.

[Formula (1)]

$$p = \frac{1}{M_h - M_a}\left(kRT_{mp}\Big/(L/T)^2 - M_a\right)$$

Here, k represents a specific-heat ratio of the gas, R represents the gas constant, and $T_{mp}$ represents a temperature of the concentration measurement space 22. $M_h$ represents a molecular weight of the gas which is the measurement target, and $M_a$ represents a molecular weight of air excluding the measurement target gas. When the composition of the air is assumed to be only 80% nitrogen and 20% oxygen, the specific-heat ratio k may be taken to be 1.4. The gas constant R is 8.31, and the molecular weight $M_a$ of the air is 28.8. When the measurement target gas is hydrogen, the molecular weight $M_h$ is 2.0. The term L/T in (Formula (1)) represents the propagation velocity of the ultrasound.

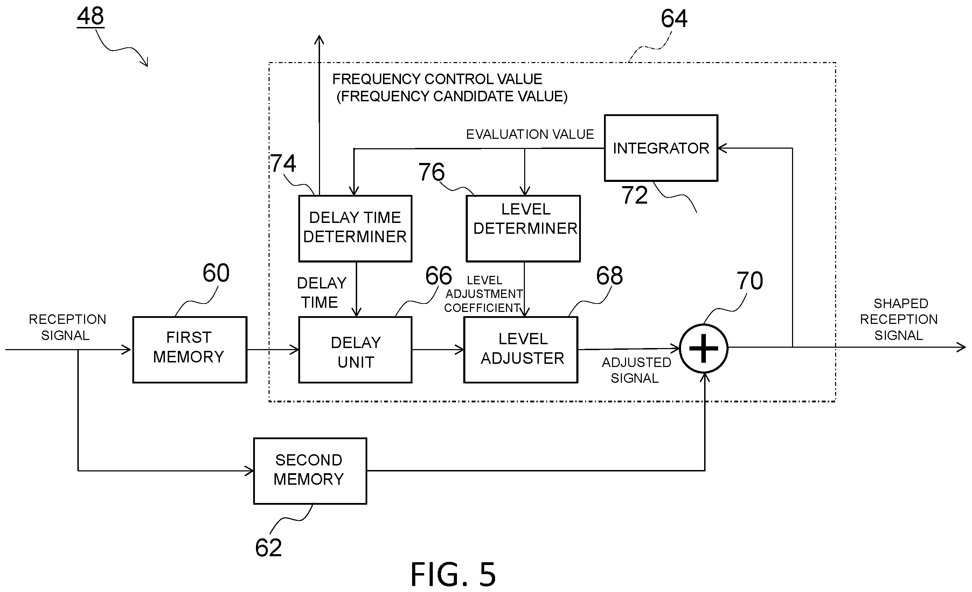

FIG. 5 shows a specific structure of the waveform shaper 48. The waveform shaper 48 forms a waveform shaping apparatus along with the receiver 16 and the reception circuit 46, and applies the waveform shaping process to the reception signal, to generate the shaped reception signal. The waveform shaper 48 comprises a first memory 60, a second memory 62, and a calculation processing unit 64. The calculation processing unit 64 comprises a delay unit 66, a level adjuster 68, an adder 70, an integrator 72, a delay time determiner 74, and a level determiner 76.

The waveform shaper 48 operates either in a calibration mode or a waveform shaping mode. The calibration mode is an operation mode in which control variables for generating the shaped reception signal are determined. The waveform shaping mode is an operation mode in which the shaped reception signal is generated using the control variables determined in the calibration mode. The control variables include, for example, a frequency control value which determines the frequency of the ultrasound transmitted by the transmitter 14, and a level adjustment coefficient by which the reception signal is multiplied.

The operation in the waveform shaping mode will now be described. The operation in the waveform shaping mode is executed after the control variables are determined through the operation in the calibration mode. That is, the operation in the waveform shaping mode is executed when the gas concentration measurement unit 50 measures the gas concentration. As described above, the transmission ultrasound transducer 42 transmits the ultrasound to the concentration measurement space 22, and the reception ultrasound transducer 44 receives the ultrasound from the concentration measurement space 22. Based on the transmission and reception of the ultrasound, the reception signal is stored in the first memory 60 and the second memory 62.

The delay unit 66 reads the reception signal from the first memory 60, and outputs a delay signal obtained by delaying the reception signal by a delay time determined by the delay time determiner 74, to the level adjuster 68. The level adjuster 68 generates an adjusted signal (level adjusted delay signal) by multiplying the delay signal by the level adjustment coefficient determined by the level determiner 76, and outputs the adjusted signal to the adder 70. The adder 70 outputs a shaped reception signal obtained by adding the adjusted signal and the reception signal which is read from the second memory 62.

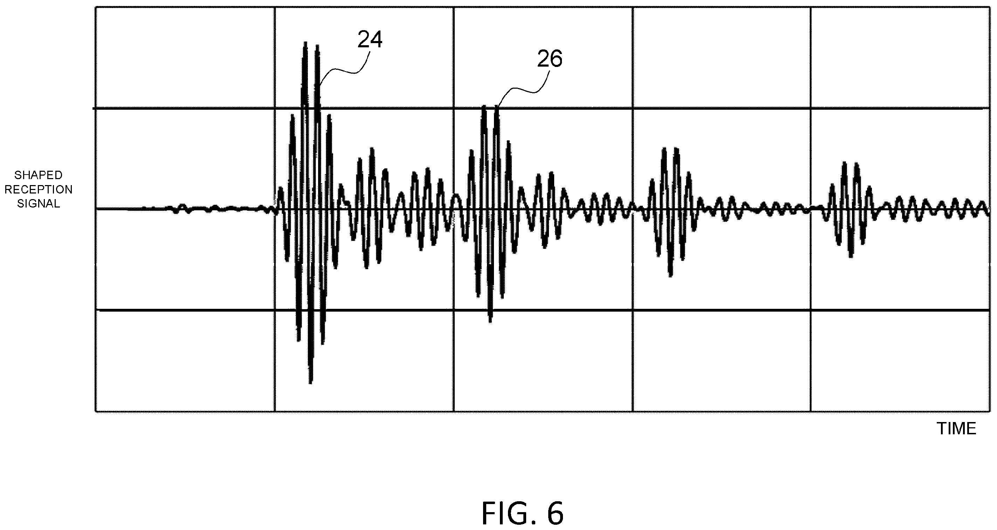

FIG. 6 shows a time waveform of a shaped reception signal determined through a simulation. In comparison to the time waveform of the reception signal illustrated in FIG. 3, the oscillating waveform between the direct wave reception pulse 24 and the reflected wave reception pulse 26 is suppressed, and a peak of the direct wave reception pulse 24 and a peak of the reflected wave reception pulse 26 appear prominently.

Next, the calibration mode will be described. The operation in the calibration mode is executed separately from the measurement of the gas concentration. Through a process similar to that in the case of measuring the gas concentration, the ultrasound is transmitted and received to and from the concentration measurement space 22. Based on the transmission and reception of the ultrasound, the reception signal is stored in the first memory 60 and the second memory 62.

During the determination of the control variables in the calibration mode, the transmission circuit 40 outputs, to the transmission ultrasound transducer 42, a transmission pulse signal having a frequency which follows a provisional frequency control value (frequency candidate value) which is output by the delay time determiner 74. In addition, during the determination of the control variables in the calibration mode, the delay unit 66, the level adjuster 68, the adder 70, and the integrator 72 execute the following process to determine an evaluation value. The evaluation value is a value obtained by combining and integrating a delay signal, in which the reception signal is delayed by a delay time corresponding to the frequency control value, and the reception signal.

The delay unit 66 reads the reception signal from the first memory 60, and outputs, to the level adjuster 68, a delay signal obtained by delaying the reception signal by the delay time (provisional delay time) provisionally determined by the delay time determiner 74. The level adjuster 68 multiplies the delay signal by a level adjustment coefficient (provisional level adjustment coefficient) provisionally determined by the level determiner 76, and outputs the resulting signal to the adder 70. The adder 70 outputs, to the integrator 72, a combined signal obtained by adding the delay signal multiplied by the provisional level adjustment coefficient (provisional level adjusted delay signal), and the reception signal which is read from the second memory 62. The integrator 72 determines an accumulated value obtained by integrating a square of the combined signal over a predetermined time period, as the evaluation value, and outputs the evaluation value to the delay time determiner 74 and the level determiner 76.

The delay time determiner 74 determines the delay time based on the evaluation value determined in this manner. During the determination of the delay time by the delay time determiner 74, the level determiner 76 fixes the level adjustment coefficient to be output to the level adjuster 68 at 1.

Here, a deviation is caused between the frequency of the transmission pulse signal and the frequency of the reception signal due to characteristics intrinsic to the transmission ultrasound transducer 42 and the reception ultrasound transducer 44. With this deviation, the frequency control value for performing appropriate waveform shaping becomes unknown, and it becomes necessary to determine an appropriate frequency control value during determination of the delay time, and to determine the delay time based on the appropriate frequency control value. Thus, the delay time determiner 74 determines the frequency control value through a search process described below, and determines the delay time by multiplying an inverse of the frequency control value (period control value) by N. Here, N is a positive number which is determined in advance, and, for example, N=2.5.

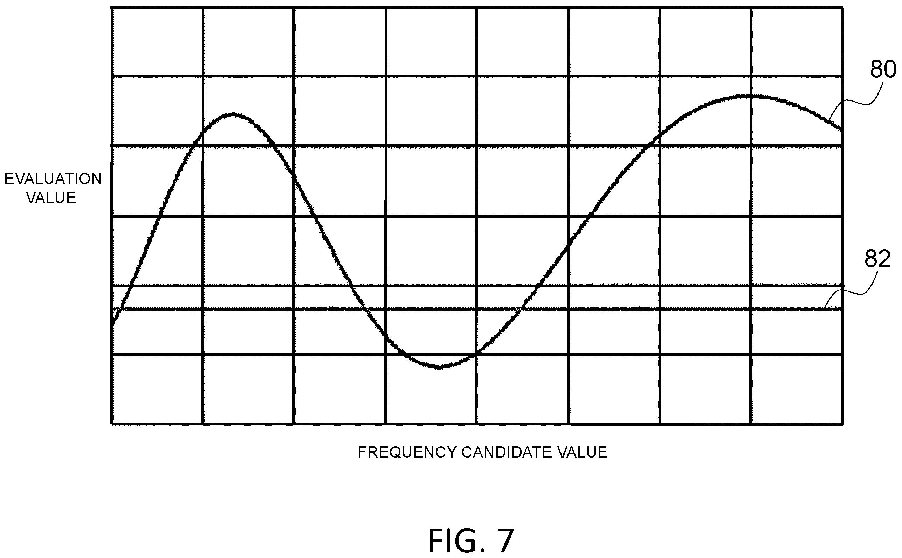

FIG. 7 shows a relationship between the frequency candidate value (provisional frequency control value) and the evaluation value, with a curve 80. The horizontal axis shows the frequency candidate value, and the vertical axis shows the evaluation value. FIG. 7 shows, with a straight line 82, the evaluation value when the level of the delay signal is provisionally set to 0, that is, the accumulated value obtained by integrating the square of the reception signal over a predetermined time period.

The evaluation value shown on the vertical axis is an evaluation value when a value obtained by multiplying the inverse of the frequency candidate value by N is set as the provisional delay time. As shown in FIG. 7, with an increase of the frequency candidate value, the evaluation value repeatedly increases and decreases. In the present embodiment, N=2.5, and, of local minimum frequency candidate values resulting in a local minimum of the evaluation value, the local minimum frequency candidate value resulting in the smallest evaluation value, that is, the local minimum frequency candidate value at a second position from the left, is the frequency candidate value (frequency control value) which should be determined. By determining a value obtained by multiplying the inverse of the frequency control value by N as the delay time, a superior shaped reception signal can be obtained.

The delay time determiner 74 continues to obtain the evaluation value from the integrator 72 while changing the frequency candidate value, and changing the provisional delay time determined by multiplying the inverse of the frequency candidate value by N, and searches for the local minimum frequency candidate value resulting in the smallest evaluation value. The delay time determiner 74 determines the found local minimum frequency candidate value as the frequency control value. The delay time determiner 74 determines the delay time by multiplying the inverse of the frequency control value (period control value) by N.

The process for the delay time determiner 74 to search for the local minimum frequency candidate value resulting in the smallest evaluation value may be performed in the following manner. In a first step, the delay time determiner 74 obtains evaluation values E1, E1p, and E1m respectively for frequency candidate values F1, F1+$\Delta$1, and F1-$\Delta$1. Here, the frequency candidate value F1 and the shift width $\Delta$1 are set such that the frequency candidate value F1-$\Delta$1 is greater than a lower limit value of a range for changing the frequency candidate value, and the frequency candidate value F1+$\Delta$1 is smaller than an upper limit value of the range for changing the frequency candidate value. In addition, the range for changing the frequency candidate value is a range between two local maximum frequency candidate values sandwiching the local minimum frequency candidate value resulting in the smallest evaluation value. Here, the local maximum frequency candidate value means a frequency candidate value resulting in a local maximum of the evaluation value.

The delay time determiner 74 determines the frequency candidate value corresponding to the smallest evaluation value among the evaluation value E1, E1p, and E1m as a center value F2 of a second step. That is, when the evaluation value E1m is the smallest, the delay time determiner 74 determines the frequency candidate value F1-$\Delta$F1 as the center value F2 of the second step. When the evaluation value E1 is the smallest, the delay time determiner 74 determines the frequency candidate value F1 as the center value F2 of the second step, and, when the evaluation value E1p is the smallest, the delay time determiner 74 determines the frequency candidate value F1+$\Delta$1 as the center value F2 of the second step.

In the second step, the delay time determiner 74 obtains evaluation values E2, E2p, and E2m respectively for frequency candidate values F2 (center value of the second step), F2+$\Delta$2, and F2-$\Delta$2. Here, the shift width $\Delta$2 is a smaller value than the shift width $\Delta$1. The delay time determiner 74 determines the frequency candidate value corresponding to the smallest value among the evaluation values E2, E2p, and E2m as a center value F3 of a third step.

In the third step, the delay time determiner 74 obtains evaluation values E3, E3p, and E3m respectively for frequency candidate values F3 (center value of the third step), F3+$\Delta$3, and F3-$\Delta$3. The shift width $\Delta$3 is a smaller value than the shift width $\Delta$2. The delay time determiner 74 determines the frequency candidate value corresponding to the smallest value among the evaluation values E3, E3p, and E3m as a center value F4 of a fourth step.

In this manner, in a jth step, the delay time determiner 74 obtains evaluation values Ej, Ejp, and Ejm respectively for frequency candidate values Fj, Fj+$\Delta$j, and Fj-$\Delta$j. A shift value $\Delta$j is a smaller value than a shift width $\Delta$(j-1). The delay time determiner 74 determines the frequency candidate value corresponding to the smallest value among the evaluation values Ej, Ejp, and Ejm as a center value F(j+1) of a (j+1)th step. Here, j is an integer greater than or equal to 2.

The delay time determiner 74 determines a center value FM of an Mth step determined in an (M-1)th step as the local minimum frequency candidate value having the smallest evaluation value, that is, as the final frequency control value. Here, M is an integer greater than or equal to 2, and which results in a sufficiently small value for the shift width $\Delta$(M-1).

Next, a process for the level determiner 76 to determine the level adjustment coefficient will be described. During the determination of the level adjustment coefficient by the level determiner 76, the delay time determiner 74 fixes the delay time to be output to the delay unit 66 to the finally determined delay time. The level determiner 76 obtains an evaluation value (level evaluation value) from the integrator 72 while changing a provisional level adjustment coefficient, and determines the provisional level adjustment coefficient resulting in the local minimum of the level evaluation value as a final level adjustment coefficient.

In the operation in the waveform shaping mode, the delay time determiner 74 outputs, to the delay unit 66, the delay time determined through the operation in the calibration mode, and the level determiner 76 outputs, to the level adjuster 68, the level adjustment coefficient determined through the operation in the calibration mode.

According to such a process, even when there is a deviation between the frequency of the transmission pulse signal and the frequency of the reception signal, an appropriate delay time for generating the adjusted signal is determined, and the adjusted signal is adjusted to the appropriate level. With this configuration, the oscillating waveform is suppressed, and a shaped reception signal in which the peak of the direct wave reception pulse and the peak of the reflected wave reception pulse appear prominently is generated by the waveform shaper 48. Therefore, precision of the gas concentration determined by the gas concentration measurement unit 50 can be improved.

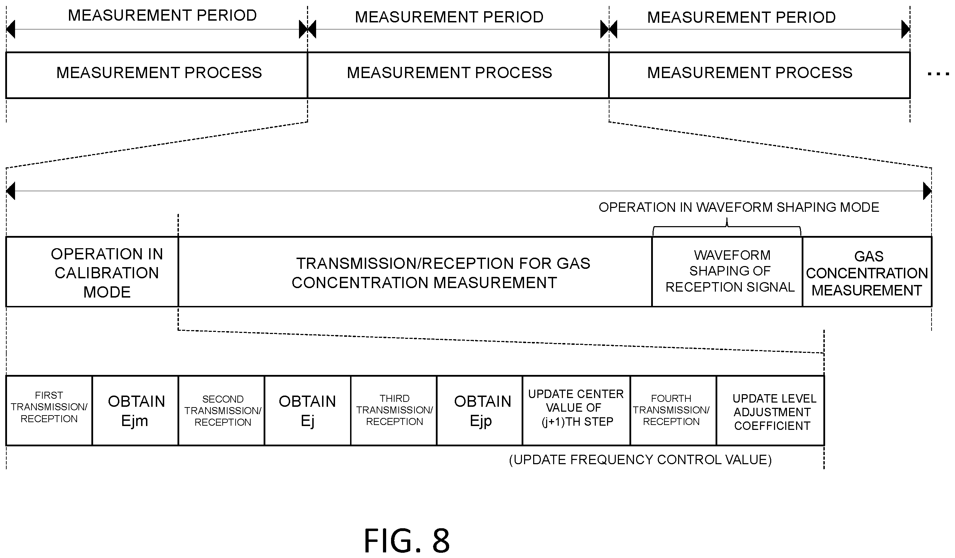

FIG. 8 shows an example of a procedure of the gas concentration measurement. In the gas concentration measurement, a measurement process is repeated with a predetermined measurement period. One measurement process includes the operation in the calibration mode, transmission and reception of the ultrasound for gas concentration measurement, the waveform shaping of the reception signal (operation in the waveform shaping mode), and the gas concentration measurement.

In the operation in the calibration mode in one measurement process, the ultrasound is transmitted and received four times. That is, first through fourth transmissions and receptions are performed. With the first transmission and reception, the second transmission and reception, and the third transmission and reception, the delay time determiner 74 obtains evaluation values Ejm, Ej, and Ejp, respectively. The delay time determiner 74 sets the smallest of the evaluation value Ejm, Ej, and Ejp as a center value F(j+1) of a (j+1)th step.

In the operation in the calibration mode in the next measurement process, the delay time determiner 74 obtains evaluation values E(j+1)m, E(j+1), and E(j+1)p through a similar process. The delay time determiner 74 determines the frequency candidate value corresponding to the smallest of the evaluation values E(j+1)m, E(j+1), and E(j+1)p as a center value F(j+2) of a (j+2)th step.

When the delay time determiner 74 reaches the point of determining a center value FM of an Mth step through repetition of the measurement process, the delay time determiner 74 determines the center value FM of the Mth step as a new frequency control value, and updates the frequency control value.

Until the frequency control value is updated through the measurement processes for M times, in the fourth transmission and reception, the process is executed using the frequency control value which is previously determined. The level determiner 76 determines and updates the level adjustment coefficient with the reception signal obtained through the fourth transmission and reception.

The transmission and reception of the ultrasound for the gas concentration measurement, the waveform shaping of the reception signal, and the gas concentration measurement in one measurement process are executed using the frequency control value and the level adjustment coefficient most recently updated in the measurement process executed in the past.

The process of determining the frequency candidate value corresponding to the smallest of the evaluation values Ejm, Ej, and Ejp as the center value F(j+1) of the (j+1)th step may be performed by obtaining a set of evaluation values Ejm, Ej, and Ejp a plurality of times. In this case, the delay time determiner 74 obtains the set of the evaluation values Ejm, Ej, and Ejp for the same j in the measurement processes executed a plurality of times consecutively. The delay time determiner 74 determines, among the evaluation values Ejm, Ej, and Ejp, the frequency candidate value corresponding to a value that has most often been determined as the minimum value among the three values as the center value F(j+1) of the (j+1)th step.

For example, when the set of the evaluation values E1m, E1, and E1p is obtained three times, then the center value F2 of the second step is determined, the set of evaluation values E2m, E2, and E2p is obtained three times, then the center value F3 of the third step is determined, the set of evaluation values E3m, E3, and E3p is obtained three times, and then the center value F4 of the fourth step is determined, and the center value F4 of the fourth step is determined as the frequency control value, the frequency control value is determined through the measurement processes being performed nine times. That is, the frequency control value is updated every nine times the measurement process is performed.

REFERENCE SIGNS LIST

10 housing, 14 transmitter, 16 receiver, 18 analyzer, 20 analyzer housing space, 22 concentration measurement space, 24 direct wave reception pulse, 26 reflected wave reception pulse, 40 transmission circuit, 42 transmission ultrasound transducer, 44 reception ultrasound transducer, 46 reception circuit, 48 waveform shaper, 50 gas concentration measurement unit, 60 first memory, 62 second memory, 64 calculation processing unit, 66 delay unit, 68 level adjuster, 70 adder, 72 integrator, 74 delay time determiner, 76 level determiner, 80 curve showing relationship between frequency candidate value and evaluation value, 82 straight line showing accumulated value obtained by integrating square of reception signal over predetermined time

**Claims**

**1.** A waveform shaping apparatus comprising:

> a receiver (16) that is configured to receive ultrasound of a frequency which follows a frequency control value, and to output a reception signal; and

an analyzer (18) that is configured to generate a shaped reception signal obtained by combining an adjusted signal, obtained by delaying the reception signal and adjusting a level thereof, with the reception signal, wherein the analyzer (18) determines an evaluation value obtained by combining and integrating a delay signal, obtained by delaying the reception signal by a delay time corresponding to the frequency control value, and the reception signal, and searches for the frequency control value which results in a local minimum of the evaluation value, and the analyzer (18) generates the adjusted signal based on the delay signal corresponding to the frequency control value resulting in the local minimum of the evaluation value.

2. The waveform shaping apparatus according to claim 1, wherein

the analyzer (18) determines a level evaluation value obtained by combining and integrating a level adjusted delay signal, obtained by multiplying the delay signal corresponding to the frequency control value resulting in the local minimum of the evaluation value, by a level adjustment coefficient, and the reception signal, and searches for the level adjustment coefficient which results in a local minimum of the level evaluation value, and the analyzer (18) generates the adjusted signal based on the level adjusted delay signal corresponding to the level adjustment coefficient resulting in the local minimum of the level evaluation value.

3. A gas concentration measurement apparatus (100) comprising:

a concentration measurement space (22) in which a concentration of a gas is to be measured;
a transmitter (14) that is configured to transmit ultrasound to the concentration measurement space (22) in response to a transmission pulse signal; and
a waveform shaping apparatus according to claim 1, wherein
the receiver (16) is configured to receive ultrasound that has propagated through the concentration measurement space (22), and to output the reception signal in response to reception of the ultrasound that has propagated through the concentration measurement space (22);
the analyzer (18) is configured to determine a space propagation time (T), which is a time of propagation of the ultrasound through the concentration measurement space (22), based on points in time at which a plurality of pulses of the reception signal are output from the receiver (16), and to determine a concentration of a gas which is a measurement target based on the space propagation time (T),
the analyzer (18) is configured to generate the shaped reception signal by combining an adjusted signal, obtained by delaying the reception signal and adjusting a level thereof, with the reception signal, and
the analyzer (18) is configured to determine the space propagation time (T) based on the shaped reception signal.

4. The gas concentration measurement apparatus (100) according to claim 3, wherein
the analyzer (18) is configured to determine the space propagation time (T) based on a difference between a first reception time at which a pulse of the reception signal is output from the receiver (16) a first time after the transmission pulse signal is input to the transmitter (14), and a second reception time at which a pulse of the reception signal is output from the receiver (16) a second time after the transmission pulse signal is input to the transmitter (14).

5. The gas concentration measurement apparatus (100) according to claim 3 or 4, wherein

the transmitter (14) is configured to transmit an ultrasound of a frequency which follows the frequency control value,
the analyzer (18) is configured to determine, separately from a process for determining the concentration of the gas, the evaluation value obtained by combining and integrating the delay signal, obtained by delaying the reception signal by the delay time according to the frequency control value, and the reception signal, and search for the frequency control value which results in the local minimum of the evaluation value, and
in the process for determining the concentration of the gas, the analyzer (18) generates the delay signal corresponding to the frequency control value resulting in the local minimum of the evaluation value, and generates the adjusted signal based on the delay signal.

6. The gas concentration measurement apparatus (100) according to claim 5, wherein

the analyzer (18) is configured to determine, separately from the process for determining the concentration of the gas which is the measurement target, a level evaluation value obtained by combining and integrating a level adjusted delay signal, obtained by multiplying the delay signal corresponding to the frequency control value resulting in the local minimum of the evaluation value, by a level adjustment coefficient, and the reception signal, and search for the level adjustment coefficient which results in a local minimum of the level evaluation value, and in the process for determining the concentration of the gas, the analyzer (18) generates the level adjusted delay signal corresponding to the level adjustment coefficient resulting in the local minimum of the level evaluation value, and generates the adjusted signal based on the level adjusted delay signal.

**Patentansprüche**

1. Wellenformungsvorrichtung, umfassend:

   einen Empfänger (16), der ausgebildet ist, Ultraschall einer Frequenz, die einem Frequenzsteuerwert folgt, zu empfangen und ein Empfangssignal auszugeben; und
   einen Analysator (18), der ausgebildet ist, ein geformtes Empfangssignal zu erzeugen, das durch Kombinieren eines eingestellten Signals, das durch Verzögern des Empfangssignals und Einstellen eines Pegels desselben erhalten wird, mit dem Empfangssignal erhalten wird, wobei
   der Analysator (18) einen Bewertungswert bestimmt, der durch Kombinieren und Integrieren eines Verzögerungssignals, das durch Verzögern des Empfangssignals um eine dem Frequenzsteuerwert entsprechende Verzögerungszeit erhalten wird, und des Empfangssignals erhalten wird, und nach dem Frequenzsteuerwert sucht, der zu einem lokalen Minimum des Bewertungswerts führt, und
   der Analysator (18) das eingestellte Signal auf der Grundlage des Verzögerungssignals erzeugt, das dem Frequenzsteuerwert entspricht, der zu dem lokalen Minimum des Bewertungswerts führt.

2. Wellenformungsvorrichtung nach Anspruch 1, wobei

   der Analysator (18) einen Pegelbewertungswert bestimmt, der durch Kombinieren und Integrieren eines pegeleingestellten Verzögerungssignals, das durch Multiplizieren des Verzögerungssignals, das dem Frequenzsteuerwert entspricht, der zu dem lokalen Minimum des Bewertungswerts führt, mit einem Pegeleinstellungskoeffizienten erhalten wird, und des Empfangssignals erhalten wird, und nach dem Pegeleinstellungskoeffizienten sucht, der zu einem lokalen Minimum des Pegelbewertungswerts führt, und
   der Analysator (18) das eingestellte Signal auf der Grundlage des pegeleingestellten Verzögerungssignals erzeugt, das dem Pegeleinstellungskoeffizienten entspricht, der zu dem lokalen Minimum des Pegelbewertungswerts führt.

3. Gaskonzentrationsmessvorrichtung (100), umfassend:

   einen Konzentrationsmessraum (22), in dem eine Konzentration eines Gases zu messen ist;
   einen Sender (14), der ausgebildet ist, Ultraschall als Reaktion auf ein Sendeimpulssignal in den Konzentrationsmessraum (22) zu senden; und
   eine Wellenformungsvorrichtung nach Anspruch 1, wobei
   der Empfänger (16) ausgebildet ist, Ultraschall zu empfangen, der sich durch den Konzentrationsmessraum (22) ausgebreitet hat, und als Reaktion auf den Empfang des Ultraschalls, der sich durch den Konzentrationsmessraum (22) ausgebreitet hat, das Empfangssignal auszugeben;
   der Analysator (18) ausgebildet ist, eine Raumausbreitungszeit (T), die eine Ausbreitungszeit des Ultraschalls durch den Konzentrationsmessraum (22) ist, auf der Grundlage von Zeitpunkten zu bestimmen, zu denen eine Vielzahl von Impulsen des Empfangssignals von dem Empfänger (16) ausgegeben wird, und eine Konzentration eines Gases, das ein Messziel ist, auf der Grundlage der Raumausbreitungszeit (T) zu bestimmen,
   der Analysator (18) ausgebildet ist, das geformte Empfangssignal durch Kombinieren eines eingestellten Signals, das durch Verzögern des Empfangssignals und Einstellen eines Pegels desselben erhalten wird, mit dem Empfangssignal zu erzeugen, und
   der Analysator (18) ausgebildet ist, die Raumausbreitungszeit (T) auf der Grundlage des geformten Empfangssignals zu bestimmen.

4. Gaskonzentrationsmessvorrichtung (100) nach Anspruch 3, wobei
   der Analysator (18) ausgebildet ist, die Raumausbreitungszeit (T) auf der Grundlage einer Differenz zwischen einer ersten Empfangszeit, zu der ein Impuls des Empfangssignals ein erstes Mal nach dem Eingeben des Sendeimpulssignals in den Sender (14) von dem Empfänger (16) ausgegeben wird, und einer zweiten Empfangszeit, zu der ein Impuls des Empfangssignals ein zweites Mal nach dem Eingeben des Sendeimpulssignals in den Sender (14) von dem Empfänger (16) ausgegeben wird, zu bestimmen.

**5.** Gaskonzentrationsmessvorrichtung (100) nach Anspruch 3 oder 4, wobei

der Sender (14) ausgebildet ist, einen Ultraschall einer Frequenz zu senden, die dem Frequenzsteuerwert folgt, der Analysator (18) ausgebildet ist, getrennt von einem Prozess zum Bestimmen der Konzentration des Gases den Bewertungswert zu bestimmen, der durch Kombinieren und Integrieren des Verzögerungssignals, das durch Verzögern des Empfangssignals um die Verzögerungszeit gemäß dem Frequenzsteuerwert erhalten wird, und des Empfangssignals erhalten wird, und nach dem Frequenzsteuerwert zu suchen, der zu dem lokalen Minimum des Bewertungswerts führt, und

in dem Prozess zum Bestimmen der Konzentration des Gases der Analysator (18) das Verzögerungssignal erzeugt, das dem Frequenzsteuerwert entspricht, der zu dem lokalen Minimum des Bewertungswerts führt, und das eingestellte Signal auf der Grundlage des Verzögerungssignals erzeugt.

**6.** Gaskonzentrationsmessvorrichtung (100) nach Anspruch 5, wobei

der Analysator (18) ausgebildet ist, getrennt von dem Prozess zum Bestimmen der Konzentration des Gases, das das Messziel ist, einen Pegelbewertungswert zu bestimmen, der durch Kombinieren und Integrieren eines pegeleingestellten Verzögerungssignals, das durch Multiplizieren des Verzögerungssignals, das dem Frequenzsteuerwert entspricht, der zu dem lokalen Minimum des Bewertungswerts führt, mit einem Pegeleinstellungskoeffizienten erhalten wird, und des Empfangssignals erhalten wird, und nach dem Pegeleinstellungskoeffizienten zu suchen, der zu einem lokalen Minimum des Pegelbewertungswerts führt, und

in dem Prozess zum Bestimmen der Konzentration des Gases der Analysator (18) das pegeleingestellte Verzögerungssignal erzeugt, das dem Pegeleinstellungskoeffizienten entspricht, der zu dem lokalen Minimum des Pegelbewertungswerts führt, und das eingestellte Signal auf der Grundlage des pegeleingestellten Verzögerungssignals erzeugt.

## Revendications

**1.** Dispositif de mise en forme de forme d'onde, comprenant :

un récepteur (16) qui est configuré pour recevoir un ultrason d'une fréquence qui suit une valeur de commande de fréquence et pour délivrer un signal de réception ; et

un analyseur (18) qui est configuré pour générer un signal de réception mis en forme obtenu en combinant un signal ajusté, obtenu en retardant le signal de réception et en ajustant un niveau de celui-ci, avec le signal de réception, dans lequel

l'analyseur (18) détermine une valeur d'évaluation obtenue en combinant et en intégrant un signal de retard, obtenu en retardant le signal de réception d'un temps de retard correspondant à la valeur de commande de fréquence, et le signal de réception, et recherche la valeur de commande de fréquence qui aboutit à un minimum local de la valeur d'évaluation, et

l'analyseur (18) génère le signal ajusté sur la base du signal de retard correspondant à la valeur de commande de fréquence aboutissant au minimum local de la valeur d'évaluation.

**2.** Dispositif de mise en forme de forme d'onde selon la revendication 1, dans lequel

l'analyseur (18) détermine une valeur d'évaluation de niveau obtenue en combinant et en intégrant un signal de retard à niveau ajusté, obtenu en multipliant le signal de retard correspondant à la valeur de commande de fréquence aboutissant au minimum local de la valeur d'évaluation par un coefficient d'ajustement de niveau, et le signal de réception, et recherche le coefficient d'ajustement de niveau qui aboutit à un minimum local de la valeur d'évaluation de niveau, et

l'analyseur (18) génère le signal ajusté sur la base du signal de retard à niveau ajusté correspondant au coefficient d'ajustement de niveau aboutissant au minimum local de la valeur d'évaluation de niveau.

**3.** Dispositif de mesure de concentration de gaz (100), comprenant :

un espace de mesure de concentration (22) dans lequel une concentration d'un gaz doit être mesurée ;

un émetteur (14) qui est configuré pour émettre un ultrason vers l'espace de mesure de concentration (22) en réponse à un signal d'impulsion d'émission ; et

un dispositif de mise en forme de forme d'onde selon la revendication 1, dans lequel

le récepteur (16) est configuré pour recevoir un ultrason qui s'est propagé à travers l'espace de mesure de concentration (22) et pour délivrer le signal de réception en réponse à la réception de l'ultrason qui s'est propagé à travers l'espace de mesure de concentration (22) ;

l'analyseur (18) est configuré pour déterminer un temps de propagation spatiale (T), qui est un temps de propagation de l'ultrason à travers l'espace de mesure de concentration (22), sur la base d'instants auxquels une pluralité d'impulsions du signal de réception sont délivrées par le récepteur (16), et pour déterminer une concentration d'un gaz qui est une cible de mesure sur la base du temps de propagation spatiale (T),

l'analyseur (18) est configuré pour générer le signal de réception mis en forme en combinant un signal ajusté, obtenu en retardant le signal de réception et en ajustant un niveau de celui-ci, avec le signal de réception, et

l'analyseur (18) est configuré pour déterminer le temps de propagation spatiale (T) sur la base du signal de réception mis en forme.

4. Dispositif de mesure de concentration de gaz (100) selon la revendication 3, dans lequel
l'analyseur (18) est configuré pour déterminer le temps de propagation spatiale (T) sur la base d'une différence entre un premier temps de réception auquel une impulsion du signal de réception est délivrée par le récepteur (16) une première fois après que le signal d'impulsion d'émission est entré dans l'émetteur (14), et un second temps de réception auquel une impulsion du signal de réception est délivrée par le récepteur (16) une seconde fois après que le signal d'impulsion d'émission est entré dans l'émetteur (14).

5. Dispositif de mesure de concentration de gaz (100) selon la revendication 3 ou 4, dans lequel

l'émetteur (14) est configuré pour émettre un ultrason d'une fréquence qui suit la valeur de commande de fréquence,

l'analyseur (18) est configuré pour déterminer, séparément d'un processus de détermination de la concentration du gaz, la valeur d'évaluation obtenue en combinant et en intégrant le signal de retard, obtenu en retardant le signal de réception du temps de retard selon la valeur de commande de fréquence, et le signal de réception, et pour rechercher la valeur de commande de fréquence qui aboutit au minimum local de la valeur d'évaluation, et

dans le processus de détermination de la concentration du gaz, l'analyseur (18) génère le signal de retard correspondant à la valeur de commande de fréquence aboutissant au minimum local de la valeur d'évaluation, et génère le signal ajusté sur la base du signal de retard.

6. Dispositif de mesure de concentration de gaz (100) selon la revendication 5, dans lequel

l'analyseur (18) est configuré pour déterminer, séparément du processus de détermination de la concentration du gaz qui est la cible de mesure, une valeur d'évaluation de niveau obtenue en combinant et en intégrant un signal de retard à niveau ajusté, obtenu en multipliant le signal de retard correspondant à la valeur de commande de fréquence aboutissant au minimum local de la valeur d'évaluation par un coefficient d'ajustement de niveau, et le signal de réception, et pour rechercher le coefficient d'ajustement de niveau qui aboutit à un minimum local de la valeur d'évaluation de niveau, et

dans le processus de détermination de la concentration du gaz, l'analyseur (18) génère le signal de retard à niveau ajusté correspondant au coefficient d'ajustement de niveau aboutissant au minimum local de la valeur d'évaluation de niveau, et génère le signal ajusté sur la base du signal de retard à niveau ajusté.

FIG. 1

EP 4 431 936 B1

FIG. 2

FIG. 3

EP 4 431 936 B1

FIG. 4

FIG. 5

FIG. 6

EVALUATION
VALUE

FREQUENCY CANDIDATE VALUE

80

82

FIG. 7

EP 4 431 936 B1

| MEASUREMENT PERIOD | MEASUREMENT PERIOD | MEASUREMENT PERIOD |
|---|---|---|
| MEASUREMENT PROCESS | MEASUREMENT PROCESS | MEASUREMENT PROCESS |

· · ·

OPERATION IN WAVEFORM SHAPING MODE

| OPERATION IN CALIBRATION MODE | TRANSMISSION/RECEPTION FOR GAS CONCENTRATION MEASUREMENT | WAVEFORM SHAPING OF RECEPTION SIGNAL | GAS CONCENTRATION MEASUREMENT |
|---|---|---|---|

| FIRST TRANSMISSION/ RECEPTION | OBTAIN Ejm | SECOND TRANSMISSION/ RECEPTION | OBTAIN Ej | THIRD TRANSMISSION/ RECEPTION | OBTAIN Ejp | UPDATE CENTER VALUE OF (j+1)TH STEP | FOURTH TRANSMISSION/ RECEPTION | UPDATE LEVEL ADJUSTMENT COEFFICIENT |
|---|---|---|---|---|---|---|---|---|

(UPDATE FREQUENCY CONTROL VALUE)

# FIG. 8

EP 4 431 936 B1

**EP 4 431 936 B1**

## REFERENCES CITED IN THE DESCRIPTION

**Patent documents cited in the description**

- JP 2018100916 A
- JP 2000249691 A
- JP 59027568 B